# EUROPEAN PATENT APPLICATION

(11) **EP 3 112 093 A1**
(43) Date of publication of application: **04.01.2017**
(21) Application number: 15003182.1
(22) Date of filing: 06.11.2015
(51) Int. Cl.: B25J 9/00, B25J 13/08, B25J 19/06, B25J 17/02

(54) **INDUSTRIAL ROBOT**

(30) Priority: 30.06.2015 JP 2015130867
(71) Applicant: Yamaha Hatsudoki Kabushiki Kaisha, Iwata-shi, Shizuoka-ken 438 (JP)
(72) Inventor: Hirano, Akifumi, Iwata-shi Shizuoka-KEN, 438-8501 (JP); Muramatsu, Hirokatsu, Iwata-shi Shizuoka-KEN, 438-8501 (JP)
(74) Representative: Müller-Boré & Partner Patentanwälte PartG mbB

(57) **Abstract**

An industrial robot (1) includes a base part (2) mounted with motors (3), a head part (4), a plurality of arms (6) provided for the motors, respectively, each arm having a first arm portion (10) connected to the motor, a second arm portion (12) connecting the first arm portion and the head part, a first ball joint (14a) pivotally connecting the first arm portion and the second arm portion, and a second ball joint (14b) pivotally connecting the second arm portion and the head part, and a detector (P1, P2a to P2c, P3, 40, 40a, 50) for detecting a connection failure of a second arm portion. Each of the first ball joints and the second ball joints includes a ball stud (20) having a ball head (22) and a socket (26) holding the ball head. Each ball stud of at least either the first ball joints or the second ball joints includes an internal passage (23) opening on an outside surface of the ball head. The detector includes a pressurizing device (P1, P2a to P2c, P3, 40) for generating a specific pressure in the internal passages, and a determination device (40a, 50) for detecting a pressure in the internal passages and determining based on a detected value whether a connection failure occurs in a second arm portion.

## Description

### Background of the Invention

### 1. Field of the Invention

The present invention relates to an industrial robot including a parallel link mechanism.

### 2. Background Art

Conventionally, there are known industrial robots including a parallel link mechanism (hereinafter, referred to as "robot") such as one described in Japanese Patent Publication No. 4850863 (hereinafter, referred to as "Patent Document 1").

This robot includes a base part serving as a support base, motors mounted on the base part, three arms to be respectively driven by the motors, and a head part connected to respective leading ends of the arms. Each of the arms includes a first arm portion connected to the motor and a second arm portion connecting the first arm portion and the head part. The position and the orientation of the head part are changed by driving the first arm portions by the motors.

Each of the second arm portions includes a pair of rods, and is connected to a first arm portion and the head part via ball joints. Specifically, each of the pair of rods is provided with cup-shaped sockets at its opposite ends. On the other hand, ball studs each have ball heads on the opposite ends thereof. One ball stud which constitutes ball joints in cooperation with the sockets at one respective ends of the pair of rods is secured to the first arm portion. The other ball stud which constitutes ball joints in cooperation with the sockets at the other respective ends of the pair of rods is secured to the head part. The sockets on the opposite ends of the rods respectively hold the ball heads of the ball studs and connecting members such as tension spring are provided between the rods to thereby connect the second arm portion to the first arm portion at one end, and to the head part at the other end.

In a robot of this type, a rapid motion of a second arm portion due to a sudden acceleration or the like or a collision of a second arm portion against an obstacle may cause the rods to be accidentally separated largely from each other, which results in disengagement of the second arm portion from the corresponding first arm portion or the head part in the worst case. Such trouble is liable to occur particularly in the case that the robot is driven for a long period of time until a ball head of ball stud or a socket is worn out.

Accordingly, the robot of the Patent Document 1 includes a circuit for detecting disengagement of a second arm portion. Specifically, each of the pair of rods constituting a second arm portion includes a wire connecting the sockets secured at its opposite ends. In addition, each end of the pair of rods is provided with a conductive member electrically connecting the socket and the ball head of the ball stud. In this way, an electrical closed circuit (detection circuit) is formed which starts and ends from and at the first arm portion passing through one rod, the head part, and the other rod. Thus, it is possible to detect whether the second arm portion is disengaged by monitoring an electrical connection of the circuit.

In many of those robots as described, in order to secure a greater range of motion for each second arm portion and to facilitate dismounting of each second arm portion or the head part for maintenance, the sockets are made to be relatively so shallow that the ball heads of the ball studs are exposed to the outside. Therefore, the configuration of Patent Document 1 in which the ball heads constitute a part (conductive part) of the detection circuit for each second arm portion is likely to cause electric shock during maintenance. Such trouble is liable to occur particularly in the case that the robot is used in a wet area. Therefore, it is desired to detect a connection failure of an arm with a safer configuration.

For example, it can be considered to put a cover over each joint between the second arm portions and the first arm portions or each joint between the second arm portions and the head part. However, in this configuration, there are undesirable problems that the cover may restrict the movable range of the robot or the cover may get caught between parts.

If a second arm portion is unintentionally disengaged during operation of the robot, the disengaged second arm portion is liable to collide against a peripheral device or work to damage it. Accordingly, it will be seen that such accidental disengagement of a second arm portion can be prevented in advance by enabling a likelihood of disengagement of the second arm portion to be detected as a connection failure of the second arm portion, for example.

### Summary of the Invention

The present invention aims to detect a connection failure of an arm with a safer configuration.

An industrial robot according to an aspect of the present invention comprises: a base part; a plurality of motors mounted on the base part; a head part for holding an end effector; a plurality of arms provided for the plurality of motors, respectively, each arm including a first arm portion connected to the motor, a second arm portion connecting the first arm portion and the head part, a first ball joint pivotally connecting the first arm portion and the second arm portion, and a second ball joint pivotally connecting the second arm portion and the head part; and a detector for detecting a connection failure of a second arm portion, characterized in that: each of the first ball joints and the second ball joints includes a ball stud having a ball head, and a socket holding the ball head, each ball stud of at least either the first ball joints or the second ball joints includes an internal passage having an opening on an outside surface of the ball head, and the detector includes a pressurizing device for generating a specific pressure in the internal passages by supplying air into the internal passages or sucking air from the internal passages, and a determination device for detecting a pressure in the internal passages and determining based on a detected value whether a connection failure occurs in a second arm portion.

These and other objects, features and advantages of the present invention will become more apparent upon reading the following detailed description along with the accompanying drawings.

### Brief Description of the Drawings

FIG. 1 is a perspective view of an industrial robot (as viewed obliquely from below) according to the present invention.
FIG. 2 is a perspective view of the industrial robot (as viewed obliquely from above).
FIG. 3 is a side view showing an essential part of an arm.
FIG. 4 is a front view showing an essential part of the arm (as viewed in the direction of the arrow IV in FIG. 2).
FIG. 5 is a sectional view (sectional view taken along the line V-V in FIG. 3) showing an essential part of the arm.
FIG. 6 is a front view showing an essential part of the arm (as viewed in the direction of the arrow VI in FIG. 2).
FIG. 7 is a perspective view of a head part (as viewed obliquely below).
FIG. 8 is a side view (partially in sectional view) of the head part.
FIG. 9 is a sectional view (sectional view taken along the IX-IX in FIG. 8) of the head part.
FIG. 10 is an explanatory view showing an arrangement of tubes (perspective view of arms and the head part).
FIG. 11 is another explanatory view showing the arrangement of tubes (perspective view of the arms and the head part).
FIG. 12A and FIG. 12B are graphs each showing changes in pressure within internal passages (changes in detection value of a pressure sensor), FIG. 12A showing a case where a second arm portion is disengaged and FIG. 12B showing a case where a second arm portion is likely to disengage.

### Detailed Description of the Preferred Embodiments of the Invention

An embodiment of the present invention will be described with reference to the accompanying drawings.

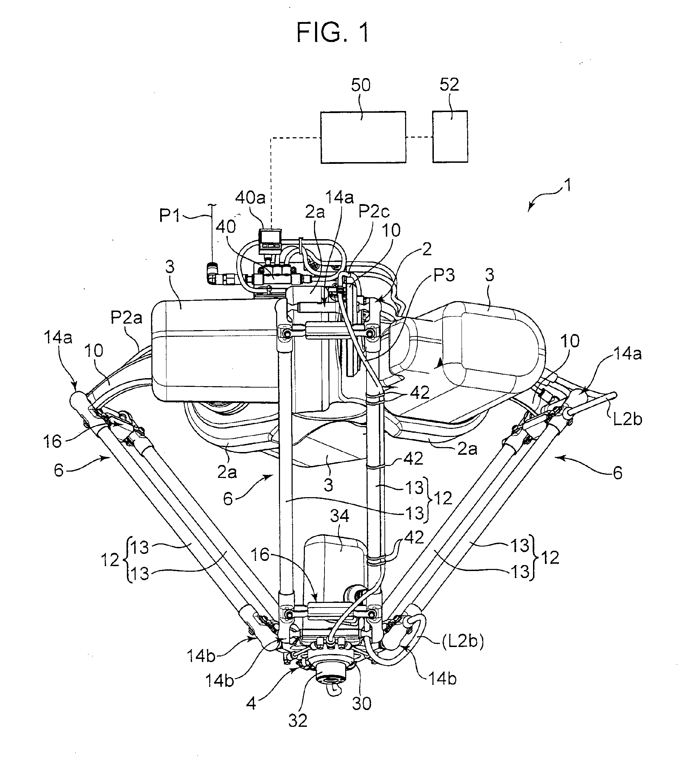

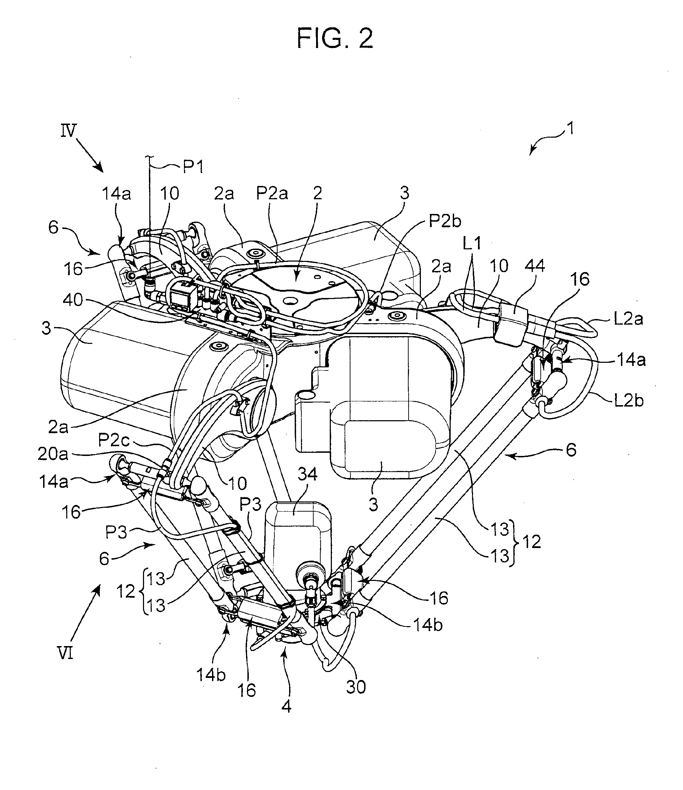

FIGS. 1 and 2 are perspective views of an industrial robot 1 according to the present invention. As shown in these figures, the industrial robot 1 is of a parallel link type.

The industrial robot 1 (hereinafter, simply referred to as "robot 1") includes a base part 2 serving as a support base to be secured to a ceiling or a frame member, a head part 4 disposed below the base part 2, and three arms 6 connected to the head part 4 and configured to be respectively driven by arm driving motors 3 mounted on the base part 2. The robot 1 is so configured that the position and the orientation of the head part 4 is changed by driving the arms 6 independently and in combination.

Three motor supporters 2a are provided on the base part 2 at regular intervals (at intervals of 120 degrees) around a vertical axis passing the center of the base part 2. The motor supporters 2a respectively fixedly support the arm driving motors 3. Each of the arm driving motors 3 is secured to the corresponding motor supporter 2a in a horizontal position with an output shaft extending in a horizontal direction. The arms 6 are respectively connected to the output shafts of the arm driving motors 3.

Each of the arms 6 includes a first arm portion 10 connected to the output shaft of the arm driving motor 3, a second arm portion 12 connecting the first arm portion 10 and the head part 4, a first ball joint 14a pivotally connecting the first arm portion 10 and the second arm portion 12, and a second ball joint pivotally connecting the second arm portion 12 and the head part 4.

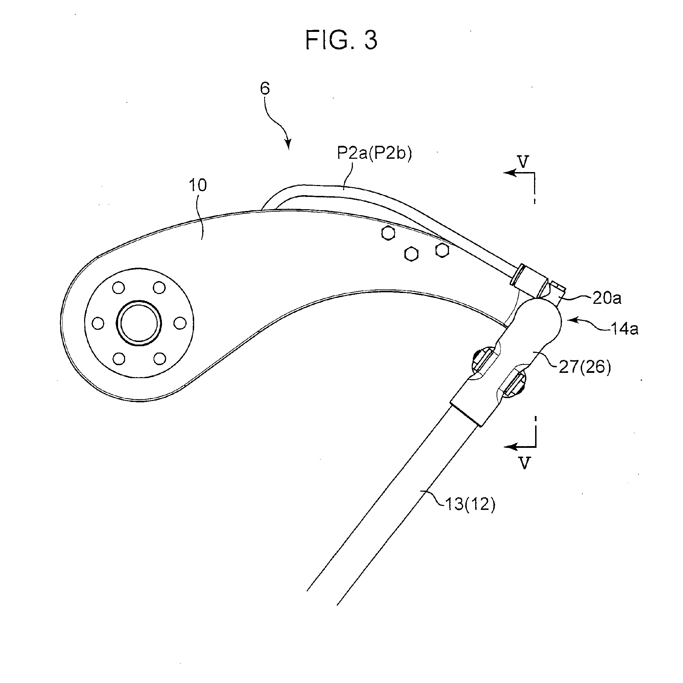

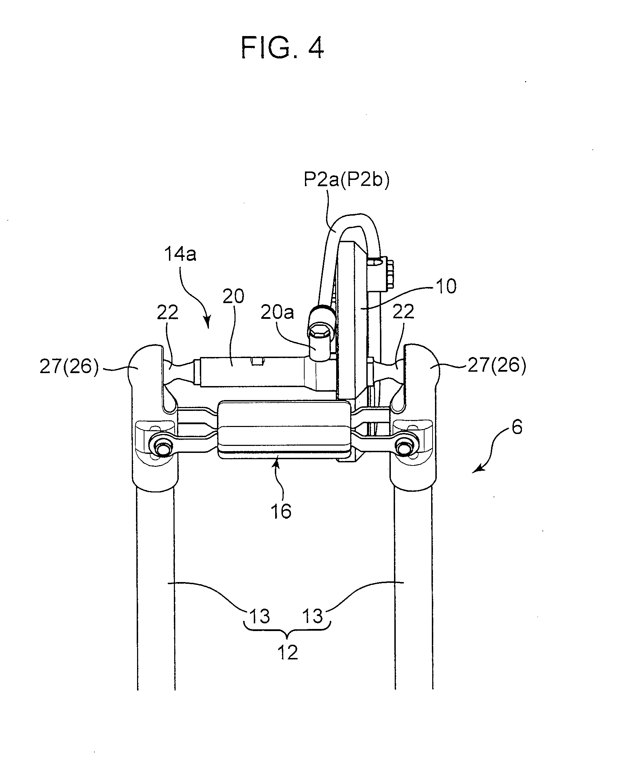

As shown in FIGS. 3 and 4, the arm portion 10 is in the form of an arch slightly tapering from a base end to a leading end in side view, the base end being secured to the output shaft of the arm driving motor 3. In this embodiment, the first arm portion 10 is in the form of a flat plate which is thin in the axial direction of the output shaft. However, the first arm portion 10 may be configured in the form of a box which is thick in the axial direction in order to enhance the strength.

As shown in FIGS. 1 and 2, the second arm portion 12 includes a pair of cylindrical rods 13 made of a light material such as carbon fiber. The pair of rods 13 of the second arm portion 12 are connected to the first arm portion 10 via the first ball joint 14a and to the head part 4 via the second ball joint 4b. Consequently, the second arm portion 12 is pivotally connected to the first arm portion 10 and the head part 4. The configurations of the first ball joint 14a and the second ball joint 14b will be described in detail later.

As shown in FIGS. 1, 2 and 7, the head part 4 includes a bracket 30 connected with each of the arms 6, a nozzle driving motor 34 secured on the bracket 30, and a tool holder 32 rotatably supported on a central portion of the bracket 30 via a bearing or the like and configured to be driven by the nozzle driving motor 34. The tool holder 32 detachably holds an end effector.

In this embodiment, various types of nozzles for sucking articles are detachably mounted as an end effector.

Now, the configuration of the first ball joint 14a connecting the first arm portion 10 and the second arm portion 12 and the configuration of the second ball joint 14b connecting the second arm portion 12 and the head part 4 will be described.

As shown in FIGS. 3 to 5, the first ball joint 14a includes a ball stud 20 secured to the first arm portion 10, and a pair of sockets 26 respectively secured to the pair of rods 13 and holding ball heads 22 of the ball stud 20.

The ball stud 20 is in the form of a shaft and has the ball heads 22 at its opposite ends. The ball stud 20 is secured to and passes through a leading end of the first arm portion 10 in the thickness direction of the first arm portion 10.

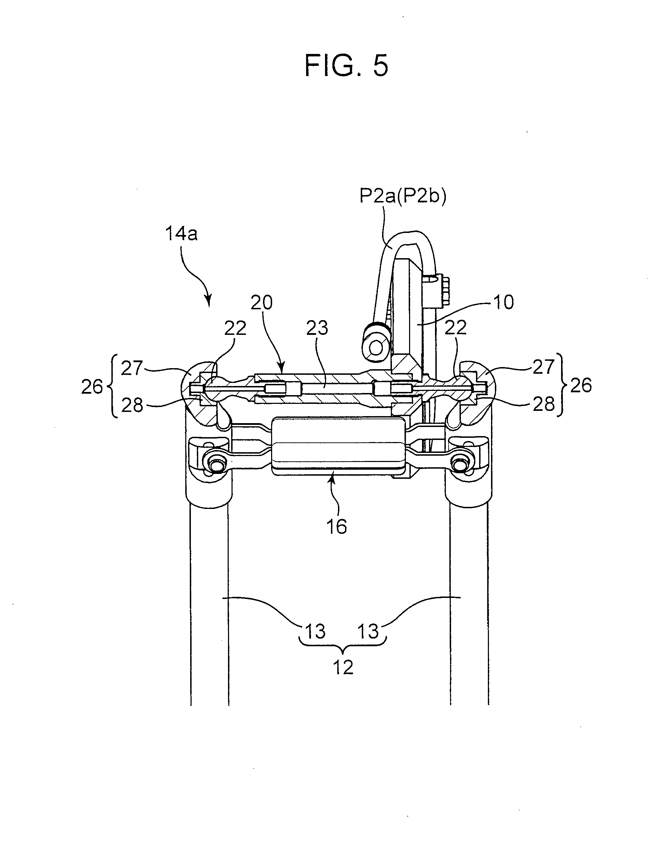

On the other hand, as shown in FIG. 5, each of the pair of sockets 26 includes a socket body portion 27 secured to the corresponding rod 13, and a receiving portion 28 embedded in the socket body portion 27 and receiving the corresponding ball head 22. The sockets 26 are respectively secured to upper ends of the rods 13 and face each other, i.e. with the respective receiving portions 28 facing each other, and respectively hold the ball heads 22 via the receiving portions 28.

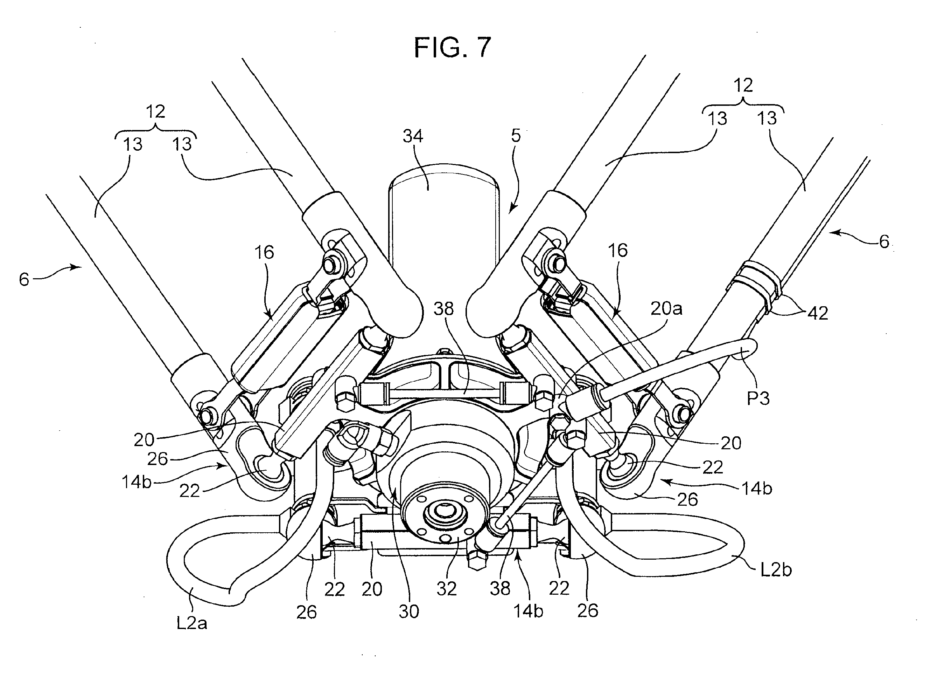

The second ball joint 14b basically has a similar configuration to the first ball joint 14b and includes, as shown in FIGS. 7 to 9, a ball stud 20 provided with the head part 4, and a pair of sockets 26 respectively secured to lower ends of the pair of rods 13 and holding ball heads 22 of the ball stud 20. It should be noted that elements of the second ball joint 14a that are identical to those of the first ball joint 14a are denoted by the same reference numerals as those of the first ball joint 14a and detailed description thereof will be omitted.

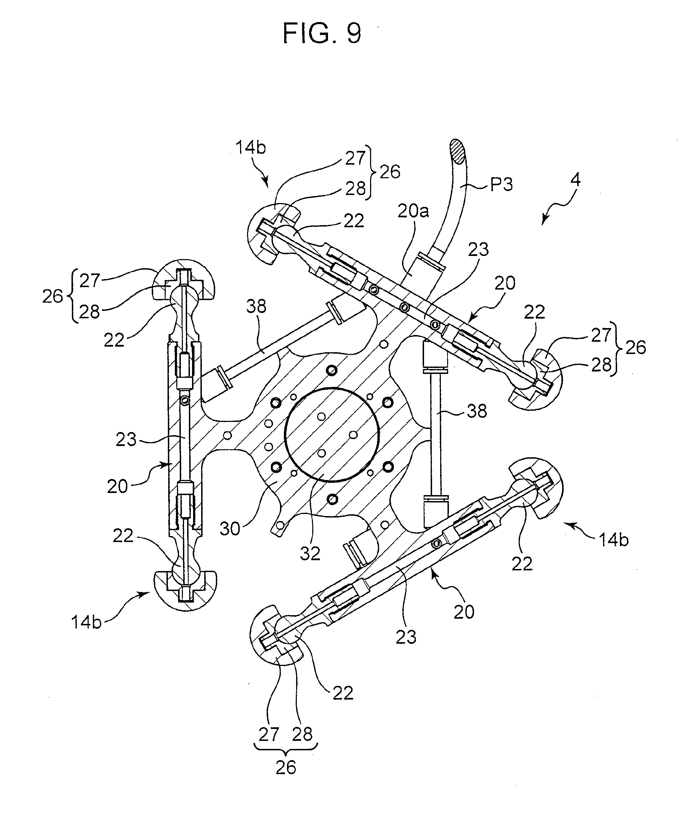

The ball stud 20 of the second ball joint 14b is integrally provided in the bracket 30 of the head part 4. Specifically, as shown in FIG. 9, a portion of the ball stud 20 of the second ball joint 14b other than the ball heads 22 are molded integrally with the bracket 30 from the same material as the bracket 30. Subsequently, the ball heads 22 are assembled to the bracket 30. Consequently, the ball studs 20 of the three second ball joints 14b connecting the second arm portions 12 are provided integrally in the bracket 30.

In each of the ball joints 14a and 14b, the receiving portions 28 of the sockets 26 are relatively shallow with respect to the ball heads 22. For example, each of the receiving portions 28 is formed with a contacting surface having an area covering a half of the outside surface of the ball head 22. This is to secure a range of pivot of the second arm portions 12 with respect to the corresponding first arm portions 10 and the head part 4 as widely as possible, and to allow attachment and detachment of the sockets 26 to and from the ball studs 20, i.e. attachment and detachment of the second arm portions 12 to and from the first arm portions 10 and the head part 4. In such configuration, a socket 26 may easily disengage from the corresponding ball stud 20, that is, a second arm portion 12 may easily disengage from the corresponding first arm portion 10 or the head part 4. Accordingly, as shown in FIG. 4, a connecting member 16 is mounted to and extends across the socket body portions 27 of the opposite sockets 26 of each first ball joint 14a. Although not specifically shown, each connecting member 16 is so configured to pull the pair of rods 30 toward each other owing to a resilient force of a spring. This allows the ball heads 22 to be kept held by the sockets 26, i.e. allows the first arm portion 10 and the second arm portion 12 to be kept connected with each other. The same applies to the sockets 26 of each second ball joint 14b as shown in FIG. 7, so that the head part 4 and each of second arm portions 12 are kept connected by connecting members 16.

However, during operation of the robot 1, the rods 13 constituting a second arm portion 12 may be accidentally separated from each other by a certain factor, which results in disengagement of the second arm portion 12 from the corresponding first arm portion 10 or the head part 4 at worst. Accordingly, the robot 1 includes the following configuration for detecting disengagement of any of the second arm portions 12 in order to stop immediately when the disengagement is detected.

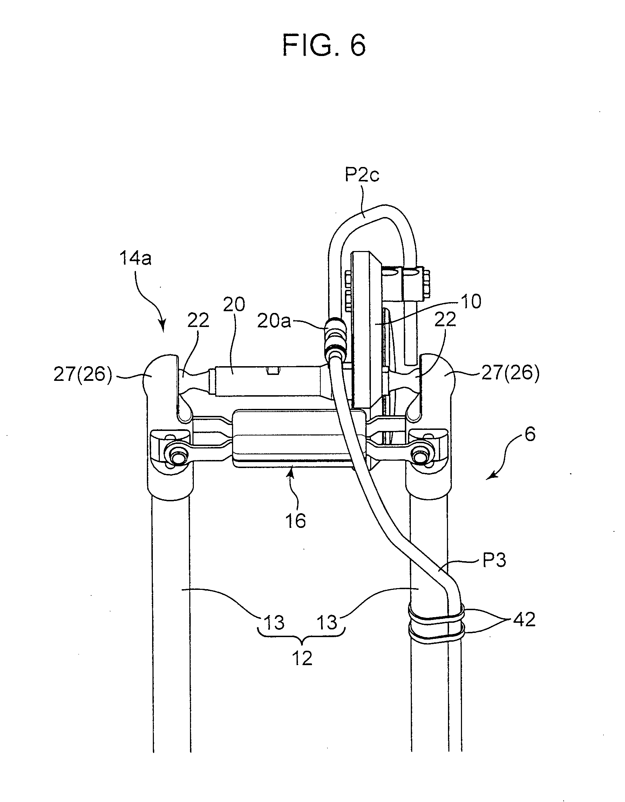

As shown in FIG. 5, each ball stud 20 of the first ball joints 14a is formed with an internal passage 23 extending axially and having openings on respective outside surfaces of the opposite ball heads 22. The internal passage 23 is supplied with air at a specific pressure via a port section 20a (see FIG. 6) provided between the opposite ball heads 22.

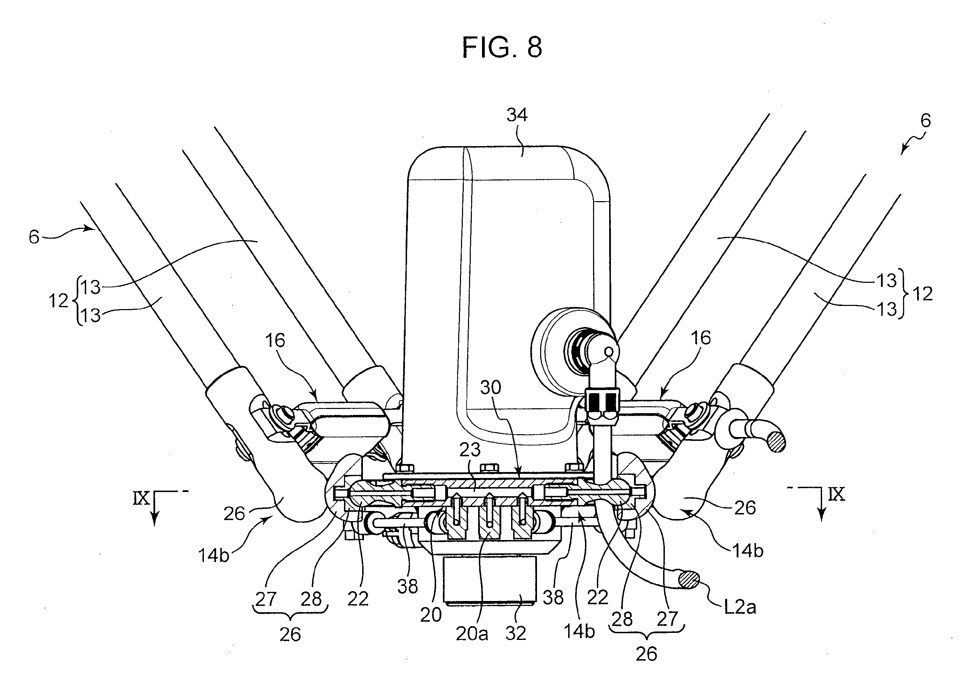

The same applies to each of the second ball joints 14b, in which the ball stud 20 is formed with an internal passage 23 extending axially and having openings on respective outside surfaces of the opposite ball heads 22, as shown in FIGS. 8 and 9. The three internal passages 23 of the ball studs 20 of the second ball joints 14b communicate with each other via bridge tubes (corresponding to a communication passage of the present invention) 38 provided in the bracket 30. Specifically, as shown in FIGS. 7 and 9, the bridge tubes 38 are provided between a specific ball stud 20 and each of the ball studs 20 disposed on both sides of the specific ball stud. Thus, the three internal passages 23 of the three ball studs 20 communicate with each other via the bridge tubes 38. In other words, the three internal passages 23 constitute a single passage. Consequently, air is supplied into the internal passages 23 of the ball studs 20 at the specific pressure via the port section 20a provided in the specific ball stud 20.

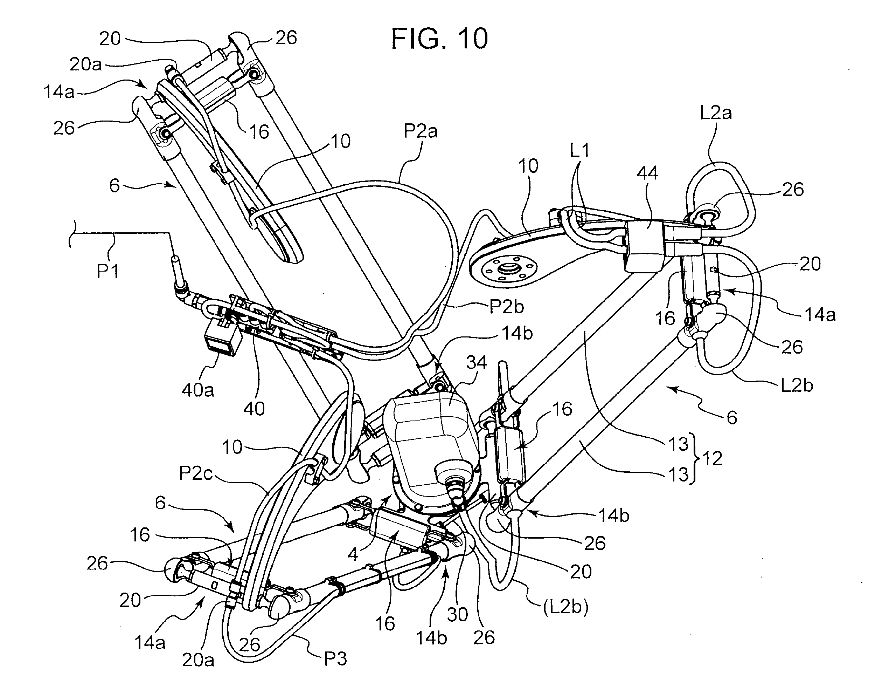

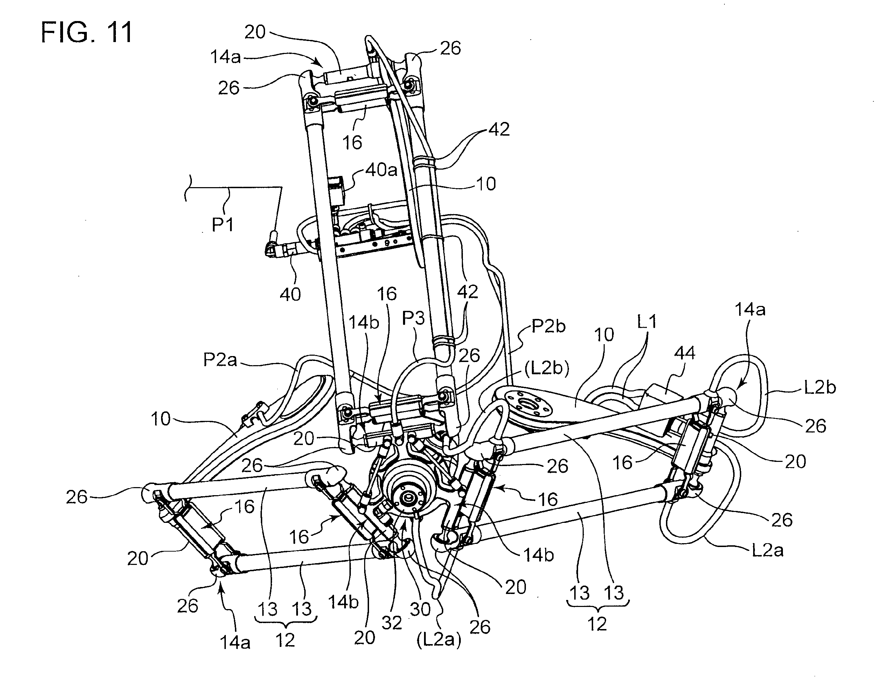

Tubes for supplying air into the internal passages 23 of the ball studs 20 are arranged as follows. As shown in FIGS. 1, 2, 10, and 11, the base part 2 is equipped with an air distributor 40. The air distributor 40 includes an input port having therein a flow regulating valve, and three output ports. The input port is connected with an unillustrated compressor by a first air tube P1, and the output ports are respectively connected with the port sections 20a of the ball studs 20 of the three first ball joints 14a by second air tubes P2a to P2c. Each of the second air tubes P2a to P2c is arranged along a side surface of each first arm portion 10 from the base part 2. The port section 20a of the ball stud 20 of one of the three first ball joints 14a has two branch ports as shown in FIGS. 2 and 6, and is connected with the port 20a of the specific ball stud 20 of the second ball joint 14b by a third air tube P3. The third air tube P3 is arranged along a rod 13 and secured to the rod 13 by a securing member such as tying band 42, as shown in FIGS. 1, 6 and 7.

As shown in FIG. 1, the air distributor 40 includes a pressure sensor 40a for detecting a pressure in the internal passages 23 of the ball joints 14a and 14b. Detection information obtained by the pressure sensor 40a is input into a controller 50 which controls the entirety of the robot 1. To be precise, the pressure sensor 40a detects a pressure in the first air tube P1 (input port). The distance between the pressure sensor 40a and the internal passages 23 is short and, therefore, the pressure in the first air tube P1 (input port) is substantially equal to the pressure in the internal passages 23. Therefore, the pressure sensor 40a is provided in the first air tube P1 (input port) in this embodiment.

In FIG. 2, the reference signs L2a and L2b denote wires for controlling the nozzle driving motor 34. As shown in FIG. 2, these wires L2a and L2b respectively pass through the pair of rods 13 constituting a second arm portion 12 with respective one ends extending out of the rods 13 and connected to a connecting device 44 secured on a specific first arm portion 10 by a connector and the respective other ends extending out of the rods 13 and connected to the nozzle driving motor 34 by a connector. Although not specifically shown, the connecting device 44 is connected to the controller 50 via a wire L1.

The controller 50 is based on a known microcomputer, and includes a central processing unit (CPU) for executing a program, a memory including, for example, RAM and ROM for storing programs and data, and an input/output (I/O) bus for allowing input and output of an electrical signal.

The controller 50 determines, based on detection information (detected pressure value) input from the pressure sensor 40a, whether any of the second arm portions 12 is disengaged from the corresponding first arm portion 10 or the head part 4, and stops the robot 1 when the disengagement is determined.

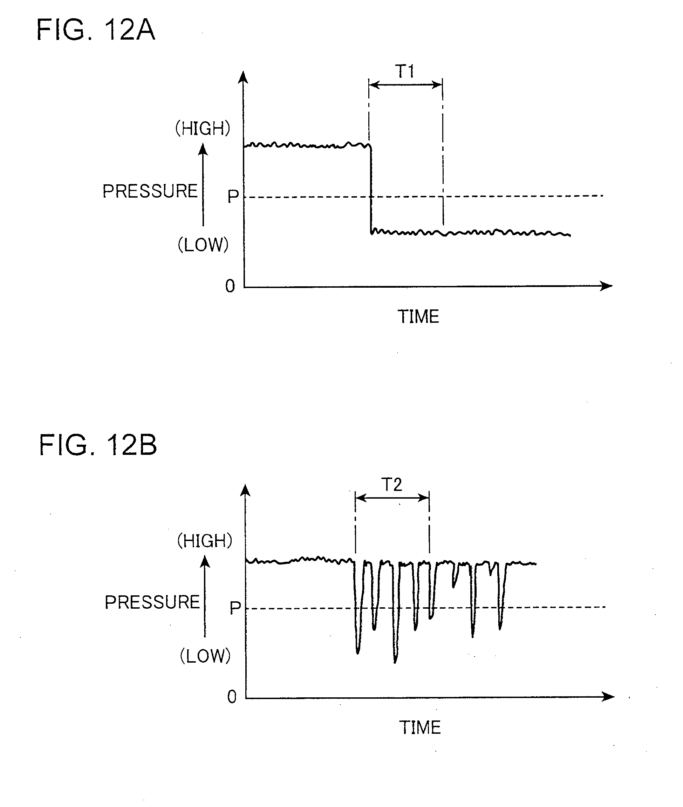

Specifically, the controller 50 determines that any of the second arm portions 12 of the three arms 6 is disengaged when the pressure value detected by the pressure sensor 40a continues to be less than a predetermined threshold value P, i.e. less than the pressure (the specific pressure) of air supplied into the internal passages 23 by a predetermined value (corresponding to a first change amount of the present invention) or more, for a predetermined set time period T1 (corresponding to a first set time period of the present invention) or more as shown in FIG. 12A. In that case, the controller 50 causes the robot 1 to immediately stop the operation, and activates an alarming device 52 (see FIG. 1) connected with the controller 50 to inform an operator of the disengagement.

In other words, air is supplied into the ball studs 20 (internal passages 23) of the ball joints 14a and 14b at the specific pressure. When the second arm portions 12 are properly connected to the corresponding first arm portions 10 and the head part 4, the pressure in the internal passages 23 is kept at the specific pressure owing to the close contact between each ball head 22 of the ball studs 20 and the corresponding receiving portion 28 of the sockets 26. However, when any of the second arm portions 12 disengages from the corresponding first arm portion 10 or the head part 4, the ball stud 20 (ball heads 22) moves away from the sockets 26 (receiving portions 28) to open the internal passage 23. Consequently, the pressure sensor 40a detects a lower pressure value. Thus, it is possible to detect disengagement of any of the second arm portions 12 by detecting a pressure in the internal passages 23 by the pressure sensor 40a and comparing the detected pressure value with the threshold value P.

In this embodiment, the above-mentioned compressor, the tubes P1, P2a to P2c, P3 and the air distributor 40 unitedly constitute a pressurizing device of the present invention, the pressure sensor 40a and the controller 50 unitedly constitute a determination device of the present invention, and these devices and the internal passages 23 of the ball studs 20 unitedly constitute a detector of the present invention.

As described above, the robot 1 supplies air into the internal passages 23 respectively formed in the ball studs 20 of the ball joints 14a and 14b at a specific pressure and detects disengagement of any of the second arm portions 12 based on a pressure change in the internal passages 23. Thus, the above-described robot 1 can detect disengagement of a second arm portion 12 without applying an electric current to the ball joints. Therefore, unlike the conventional industrial robots of this type which detect disengagement of an arm based on electrical conduction between a ball stud and a socket, there is no likelihood of causing an electric shock at the time of maintenance. Consequently, it is possible to detect disengagement of any of the second arm portions 12 with a safer configuration.

Further, in the above-described robot 1, each of the second arm portions 12 includes a pair of rods 13, and the opposite ball heads 22 of each ball stud 20 are held by the sockets 26 secured to the rods 13, whereby the second arm portions 12 are connected with the corresponding first arm portions 10 and the head part 4. However, as described above, each of the internal passages 23 extends in the axial direction of the ball stud 20 and has openings on the respective outside surfaces of the opposite ball heads 22. Therefore, even when one of the pair of rods 13 is disengaged, the pressure sensor 40a detects a lower pressure value. Thus, the above-described robot 1 is advantageous in that it is possible to successfully detect, not only complete disengagement of a second arm portion 12 from the corresponding first arm portion 10 or the head part 4, but also disengagement of a rod 13 from the corresponding first arm portion 10 or the head part 4.

Further, the internal passages 23 of the ball studs 20 of the second ball joints 14b communicate with each other in series via the bridge tubes 38. This makes it possible to supply air into a specific (one) ball stud 20 through the third air tube P3 to thereby supply the air into all of the internal passages 23. Therefore, the above-described robot 1 is advantageous in that it is possible to simplify the layout of tubes around the head part 4 and prevent the tubes for air supply from obstructing the operation of the arms 6 or an end effector. In addition, the robot 1 can be assembled more easily.

The above-described robot 1 exemplifies a preferred embodiment of an industrial robot according to the present invention, and the specific configuration thereof may be appropriately changed without departing from the scope of the present invention.

For example, in the robot 1 of the above-described embodiment, the controller 50 determines, based on a pressure value detected by the pressure sensor 40a, whether any of the second arm portions 12 is disengaged, and stops the robot 1 when the disengagement is determined. However, the controller 50 may also be configured to determine whether any of the second arm portions 12 is likely to disengage, and stop the robot 1 when the likelihood of disengagement is determined. Specifically, as shown in FIG. 12B, the controller 50 may be appreciated to count sudden reductions in detected pressure value in which the detected pressure value becomes less than the threshold value P only for a small time period shorter than the above-mentioned set time period T1, i.e. instantaneous deviations of the pressure in the internal passages 23 from the pressure (the specific pressure) of air supplied into the internal passages 23 by a predetermined value (corresponding to a second change amount of the present invention) or more, and determine, when the count exceeds a predetermined value within a predetermined set time period T2 (corresponding to a second set time period of the present invention), that there is a likelihood that any of the second arm portions 12 will disengage and stop the robot 1. Specifically, a long-term continuous operation of the robot 1 is liable to cause wear of a ball head 22 of a ball stud 20 or the receiving portion 28 of a socket 26, so that the ball stud 20 is liable to easily disengage from the socket 26, i.e. the second arm portion 12 is liable to easily disengage. Under such condition, air is liable to leak out of the internal passage 23 due to deformation of the ball head 22 or the socket 26 caused by the above-mentioned wear. Consequently, there are repeated occurrences that the pressure value detected by the pressure sensor 40a suddenly becomes less than the threshold value P. Therefore, as described above, it is possible to determine the likelihood of disengagement of a second arm portion 12 by counting the number of times that the pressure value detected by the pressure sensor 40a suddenly becomes less than the threshold value P. For example, an experimentally obtained value can be used for the threshold count value based on which the likelihood of disengagement of a second arm portion 12 is determined.

Such configuration makes it possible to detect a likelihood of disengagement of any of the second arm portions 12 to perform maintenance of the second arm portion 12 in advance. Consequently, it is advantageous in that actual disengagement of a second arm portion 12 can be prevented. It should be noted that here the controller 50 has been described as determining disengagement and a likelihood of disengagement of any of the second arm portions 12. However, the controller 50 may be configured to only determine a likelihood of disengagement of any of the second arm portions 12.

In addition, the robot 1 of the above-described embodiment can detect disengagement of any of the three second arm portions 12. The robot 1 may be appreciated to specify which arm 6 has a disengaged second arm portion 12. In this case, for example, each ball stud 20 of second ball joints 14b is formed with an independent internal passage 23, and ball studs (internal passages 23) of first and second ball joints 14a, 14b of each arm 6 are connected in series by an air tube provided with a pressure sensor 40a. This configuration makes it possible to detect disengagement of a second arm portion 12 for each arm 6 based on a pressure value detected by a respective air distributor 40. Therefore, it is possible to specify an arm 6 having a disengaged second arm portion 12.

Further, in the robot 1 of the above-described embodiment, the third air tube P3 is arranged along the outer surface of a rod 13 and secured to the rod 13 by the tying band 42. However, the third tube P3 may be arranged inside the rod 13, similarly to the wires L2a and L2b used for controlling the nozzle driving motor 34.

Further, in the robot 1 of the above-described embodiment, air is supplied into the internal passages 23 of the ball studs 20. Alternatively, the robot 1 may be configured such that air is sucked from the internal passages 23. In other words, a specific negative pressure may be generated in the internal passages 23 instead of supplying a specific positive pressure into the internal passages 23, to determine that any of the second arm portions 12 is disengaged when the pressure value detected by the pressure sensor 40a continues to be greater than a predetermined threshold value for a predetermined set time period or more. In this case, a likelihood of disengagement of any of the second arm portions 12 may be determined based on the number of times that the pressure value detected by the pressure sensor 40a suddenly exceeds a threshold value. Such configuration also makes it possible to provide advantageous effects similar to those of the above-described embodiment.

The embodiments of the present invention described above can be summarized as follows.

An industrial robot comprises: a base part; a plurality of motors mounted on the base part; a head part for holding an end effector; a plurality of arms provided for the plurality of motors, respectively, each arm including a first arm portion connected to the motor, a second arm portion connecting the first arm portion and the head part, a first ball joint pivotally connecting the first arm portion and the second arm portion, and a second ball joint pivotally connecting the second arm portion and the head part; and a detector for detecting a connection failure of a second arm portion, characterized in that: each of the first ball joints and the second ball joints includes a ball stud having a ball head, and a socket holding the ball head, each ball stud of at least either the first ball joints or the second ball joints includes an internal passage having an opening on an outside surface of the ball head, and the detector includes a pressurizing device for generating a specific pressure in the internal passages by supplying air into the internal passages or sucking air from the internal passages, and a determination device for detecting a pressure in the internal passages and determining based on a detected value whether a connection failure occurs in a second arm portion.

Thus, when the second arm portions are normally connected to the first arm portions (or the head part), the pressure in the internal passages of the ball joints are maintained at the specific pressure. On the other hand, when a connection failure occurs in a second arm portion, specifically, when any of the second arm portions is disengaged from the corresponding first arm portion (or the head part) or has a likelihood of disengagement due to wear of a ball head or a socket, the internal passage of a ball joint is open, so that the pressure in the internal passages changes. In the above-described industrial robot, the determination device detects the above-mentioned connection failure of second arm portion based on such pressure change in the internal passages. This configuration makes it possible to detect a connection failure of a second arm portion without applying an electric current to the ball joints. Therefore, a connection failure of a second arm portion can be detected with a safer configuration.

As a more specific configuration, each of the second arm portions includes a pair of a first rod and a second rod extending in parallel to each other, each of the first ball joints includes a socket secured at one end of the first rod and a socket secured at one end of the second rod, the both sockets facing each other, and a ball stud connected with a first arm portion and having ball heads facing in opposite directions, the ball heads being held by the sockets to thereby connect the first arm portion with the second arm portion, and each of the second ball joints includes a socket secured at the other end of the first rod and a socket secured at the other end of the second rod, the both sockets facing each other, and a ball stud connected with the head part and having ball heads facing in the opposite directions, the ball heads being held by the sockets to thereby connect the second arm portion with the head part, at least one of the first and second ball joints having an internal passage extending along an arrangement direction of the opposite ball heads and having openings on respective outside surfaces of the opposite ball heads.

This configuration makes it possible to successfully detect such a connection failure that one of the pair of rods constituting a second arm portion is disengaged or is likely to disengage from the corresponding first arm portion (or the head part).

In this case, particularly in the case where the ball studs of the second ball joints are formed with internal passages, respectively, it is preferred that the head part includes a communication passage connecting the respective internal passages of the ball studs of the second ball joints connecting the second arm portions, and that the pressurizing device supplies a specific pressure in the internal passage of a specific ball stud.

This configuration makes it possible to simplify the layout of tubes for generating the specific pressure in the internal passages of the second ball joints.

In this case, particularly in the case where the ball studs of the first ball joints and the second ball joints are formed with internal passages, respectively, it may be configured such that the pressurizing device includes a first tube communicating with one pressure supply source, a plurality of second tubes branching from the first tube and respectively connecting with the internal passages of the ball studs of the first ball joints, and a third tube branching from one of the second tubes and connecting with the internal passage of the specific ball stud.

This configuration makes it possible to simply generate the specific pressure in the internal passages of the ball studs of the first ball joints and the second ball joints. In particular, only the single third tube is used for supplying the specific pressure to the second ball joints, which makes it possible to arrange (assemble) the tubes in an improved way and reduce influence on the operation of the arms.

In addition, in the above-described industrial robot, the determination device determines a disengaged state of a second arm portion as the connection failure of the second arm portion, the disengaged state of the second arm portion being determined when the pressure in the internal passages is detected to continue to deviate from the specific pressure by a predetermined first change amount or more for a predetermined first set time period or more.

This configuration makes it possible to successfully detect disengagement of a second arm portion.

Further, in the above-described industrial robot, the determination device determines a likelihood of disengagement of a second arm portion as the connection failure of the second arm portion, the likelihood of disengagement of the second arm portion being determined when the pressure in the internal passages is detected to instantaneously deviate from the specific pressure by a predetermined second change amount a predetermined number of times or more within a predetermined second set time period.

This configuration makes it possible to successfully detect a state that a second arm portion is likely to disengage due to wear of a ball head or a socket of a ball stud, i.e. likelihood of disengagement of a second arm portion.

## Claims

1. An industrial robot, comprising:
a base part (2);
a plurality of motors (3) mounted on the base part (2);
a head part (4) for holding an end effector;
a plurality of arms (6) provided for the plurality of motors, each arm including
a first arm portion (10) connected to the motor (3),
a second arm portion (12) connecting the first arm portion (10) and the head part (4),
a first ball joint (14a) pivotally connecting the first arm portion (10) and the second arm portion (12), and
a second ball joint (14b) pivotally connecting the second arm portion (12) and the head part (4); and
a detector (P1, P2a to P2c, P3, 40, 40a, 50) for detecting a connection failure of a second arm portion (12), **characterized in that**:
each of the first ball joints (14a) and the second ball joints (14b) includes a ball stud (20) having a ball head (22), and a socket (26) holding the ball head (22),
each ball stud (20) of at least either the first ball joints (14a) or the second ball joints (14b) includes an internal passage (23) having an opening on an outside surface of the ball head (22), and
the detector (P1, P2a to P2c, P3, 40, 40a, 50) includes a pressurizing device (P1, P2a to P2c, P3, 40) for generating a specific pressure in the internal passages (23) by supplying air into the internal passages (23) or sucking air from the internal passages (23), and a determination device (40a, 50) for detecting a pressure in the internal passages (23) and determining based on a detected value whether a connection failure occurs in a second arm portion (12).

2. An industrial robot according to claim 1, wherein:
each of the second arm portions (12) includes a pair of a first rod (13) and a second rod (13) extending in parallel to each other;
each of the first ball joints (14a) includes a socket (26) secured at one end of the first rod (13) and a socket (26) secured at one end of the second rod (13), the both sockets (26) facing each other, and a ball stud (20) connected with a first arm portion (10) and having ball heads (22) facing in opposite directions, the ball heads (22) being held by the sockets (26) to thereby connect the first arm portion (10) with the second arm portion (12); and
each of the second ball joints (14b) includes a socket (26) secured at the other end of the first rod (13) and a socket (26) secured at the other end of the second rod (13), the both sockets (26) facing each other, and a ball stud (20) connected with the head part (4) and having ball heads (22) facing in the opposite directions, the ball heads (22) being held by the sockets (26) to thereby connect the second arm portion (12) with the head part (4), at least one of the first and second ball joints (14a, 14b) having an internal passage (23) extending along an arrangement direction of the opposite ball heads (22) and having openings on respective outside surfaces of the opposite ball heads (22).

3. An industrial robot according to claim 1 or 2, wherein:
the ball studs (20) of the second ball joints (14b) are formed with the internal passages (23), respectively:
the head part (4) includes a communication passage (38) connecting the respective internal passages (23) of the ball studs (20) of the second ball joints (14b) connecting the second arm portions (12); and
the pressurizing device (P1, P2a to P2c, P3, 40) supplies a specific pressure in the internal passage (23) of a specific ball stud (20).

4. An industrial robot according to claim 3, wherein:
the ball studs (20) of the first ball joints (14a) and the second ball joints (14b) are formed with the internal passages (23), respectively, and
the pressurizing device (P1, P2a to P2c, P3, 40) includes a first tube (P1) communicating with one pressure supply source, a plurality of second tubes (P2a to P2c) branching from the first tube (P1) and respectively connecting with the internal passages (23) of the ball studs (20) of the first ball joints (14a), and a third tube (P3) branching from one of the second tubes (P2a to P2c) and connecting with the internal passage (23) of the specific ball stud (20).

5. An industrial robot according to any one of claims 1 to 4, wherein
the determination device (40a, 50) determines a disengaged state of a second arm portion (12) as the connection failure of the second arm portion (12), the disengaged state of the second arm portion (12) being determined when the pressure in the internal passages (23) is detected to continue to deviate from the specific pressure by a predetermined first change amount or more for a predetermined first set time period or more.

6. An industrial robot according to any one of claims 1 to 5, wherein
the determination device (40a, 50) determines a likelihood of disengagement of a second arm portion (12) as the connection failure of the second arm portion (12), the likelihood of disengagement of the second arm portion (12) being determined when the pressure in the internal passages (23) is detected to instantaneously deviate from the specific pressure by a predetermined second change amount a predetermined number of times or more within a predetermined second set time period.
